# EUROPÄISCHE PATENTSCHRIFT

(11) **EP 1 582 126 B1**
(45) Veröffentlichungstag und Bekanntmachung des Hinweises auf die Patenterteilung: **26.11.2008**
(21) Anmeldenummer: 05102629.2
(22) Anmeldetag: 04.04.2005
(51) Int. Cl.: A47J 31/057

(54) **Vorrichtung zum Herstellen eines Brühgetränkes**
Device for making infusion drinks
Dispositif pour la préparation d'infusions

(30) Priorität: 02.04.2004 DE 102004016989
(43) Veröffentlichungstag der Anmeldung: 05.10.2005
(73) Patentinhaber: BSH Bosch und Siemens Hausgeräte GmbH, 81739 München (DE)
(72) Erfinder: Jäger, Harald, 83349 Palling-Freutsmoos (DE); Stief, Peter, 83329 Waging am See (DE)

(56) Entgegenhaltungen:
- US-A- 3 494 276
- US-A- 4 725 714

## Beschreibung

Die Erfindung bezieht sich auf eine Vorrichtung zum Herstellen eines Brühgetränkes.

Eine derartige Vorrichtung ist beispielsweise eine Kaffeemaschine, insbesondere eine Haushalts-Kaffeemaschine. In der einfachsten Ausführungsform, weisen Kaffeemaschinen lediglich ein einziges Bedienelement zum EIN/AUS-Schalten auf (vgl. US 3 494 276). Derartige Kaffeemaschinen können jedoch, je nach eingefüllter Wassermenge, Kaffee zubereiten, dessen Menge vom Brühvolumen für eine Tasse bis zum Brühvolumen für 10 oder mehr Tassen reicht. Da jedoch beim Brühen von geringen Kaffeemengen mit wenig Wasser und ebenfalls wenig Kaffeemehl das Wasser wesentlich schneller durch das Kaffeemehl läuft als dies beim Einsatz großer Kaffeemehlmengen für die maximale Tassenanzahl der Fall ist, kann der Geschmack des in kleiner Menge gebrühten Kaffees verglichen mit dem Geschmack einer großen Menge Kaffee, die mit der gleichen Kaffeemaschine gebrüht wurde, zu wünschen übrig lassen. Bei höherwertigen Geräten wurde deshalb eine Möglichkeit zur Einstellung der Tassenanzahl geschaffen, so dass die Heizleistung der Kaffeemaschine derart verbessert werden kann, dass für jede Füllmenge an Kaffeemehl eine für das Kaffeearoma möglichst optimale Durchlaufzeit (Brühzeit) erreicht wird (vgl. US 4 725 714). Damit erhöhen sich jedoch auch die Anzahl der Bedienelemente, was zu Fehlern bei der Bedienung führen kann. Dies ist dann besonders ungünstig, wenn die Tassenvorwahl vergessen wird, so dass beispielsweise eine kleine Brühmenge mit der Stellung "große Brühmenge" gebrüht wird, da sich dadurch das Kaffeearoma verschlechtern kann.

Der Erfindung liegt somit die Aufgabe zugrunde, eine Vorrichtung zum Herstellen eines Brühgetränkes, insbesondere eine Kaffeemaschine, mit einer erleichterten Bedienung bereitzustellen.

Die Aufgabe wird durch die im Anspruch 1 angegebenen Merkmale gelöst.

Durch die Kombination der Mengenvorwahl mit dem Bedienelement für das Ein- und Ausschalten, werden drei Funktionen, d.h. das Einschalten, das Ausschalten und die Parameterwahl, durch ein einziges Bedienelement abgedeckt, so dass die Anzahl der Bedienelemente verringert werden kann, was die Bedienung der Kaffeemaschine stark erleichtert. Darüber hinaus kann es nicht mehr passieren, dass vergessen wird, die Mengenvorwahl auf die gewünschte Tassenanzahl einzustellen.

Der Parameter ist dabei bevorzugt eine Brühmenge oder eine Aromavorwahl des herzustellenden Brühgetränkes.

Es ist bevorzugt, wenigstens zwei Brühmengen durch jeweils ein Kombinations-Bedienelement vorwählen zu können. Dadurch werden Fehlerquellen weiter vermieden.

Besonders zweckmäßig ist es, die AUS-Schaltfunktionen der ersten und zweiten Kombinations-Bedienelemente zu koppeln, so dass die erfindungsgemäße Vorrichtung mit jedem Kombinations-Bedienelement ausgeschaltet werden kann, unabhängig davon, mit welchem der Kombinations-Bedienelemente die erfindungsgemäße Vorrichtung eingeschaltet wurde.

Bevorzugt ist das Kombinations-Bedienelement eine Taste; das Kombinations-Bedienelement kann aber auch als Kippschalter oder Berührungssensor ausgebildet sein, da diese Art von Bedienungselementen sehr einfach und unkompliziert zu betätigen sind.

Da erfindungsgemäß die Anzahl der Bedienelemente möglichst klein sein sollte, können weitere Bedienelemente, beispielsweise für eine Aromavorwahl, vorgesehen sein, die eine weitere Anpassung der Heiz- bzw. Durchlaufleistung an den bevorzugten Kundengeschmack zulässt, ohne dass die Übersichtlichkeit der Bedienung der erfindungsgemäßen Vorrichtung leidet.

Gemäß eine bevorzugten Variante handelt es sich bei der erfindungsgemäßen Vorrichtung zum Herstellen eines Brühgetränkes um eine Kaffeemaschine.

Ein Ausführungsbeispiel einer erfindungsgemäßen Vorrichtung in Form einer Kaffeemaschine wird nachfolgend anhand der Zeichnungen näher erläutert. Es zeigen:
Fig. 1 eine perspektivische, schematische Darstellung eines Ausführungsbeispiels einer erfindungsgemäßen Kaffeemaschine, und
Fig. 2 eine herausvergrößerte Darstellung der Bedienelemente der Kaffeemaschine nach Fig. 1.

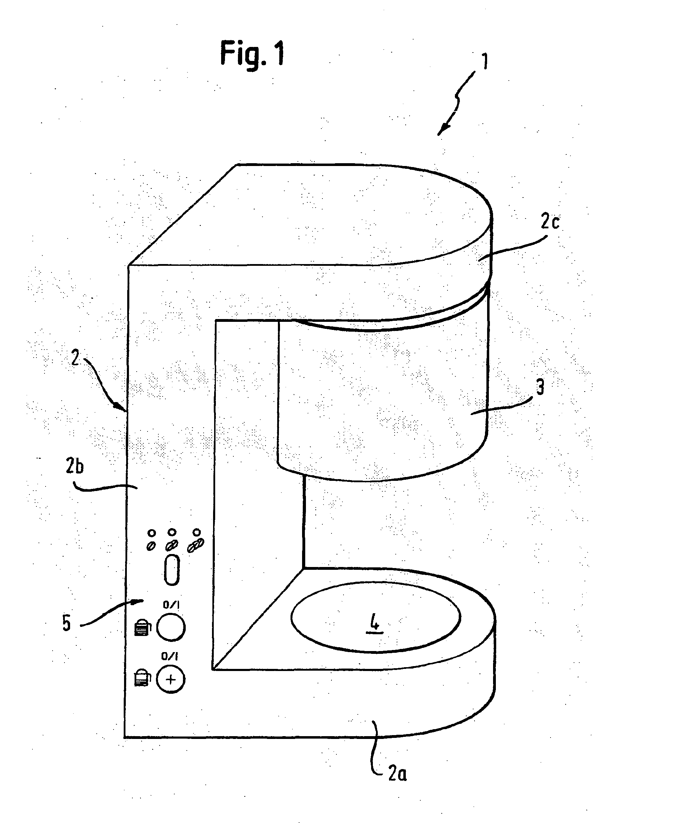

Fig. 1 zeigt in perspektivischer, stark schematisierter Darstellung eine Kaffeemaschine 1, die im dargestellten Ausführungsbeispiel als Haushalts-Kaffeemaschine ausgebildet ist. Die Kaffeemaschine 1 umfasst ein Gehäuse 2 mit einem Sockel 2a, der über einen Träger 2b mit einem Überlauf 2c verbunden ist, unter dem ein Filterträger 3 angeordnet ist.

Im Sockel 2a befindet sich im Falle des vorliegenden Ausführungsbeispiels eine Warmhalteplatte 4, die unterhalb des Filterträgers 3 angeordnet ist, und auf die eine zu befüllende Kaffeekanne bzw. Karaffe gestellt werden kann.

Im Gehäuse 2, bevorzugt im Sockel 2a, ist eine in den Figuren nicht näher dargestellte, aber allgemein bekannte Heizung zum Aufheizen des in einem Wassertank im Träger 2b aufgenommenen Wassers untergebracht, die bevorzugt als Durchlauferhitzer ausgebildet ist. Im Gehäuse 2 ist weiterhin eine Steuerung für die Heizung vorgesehen, die ebenfalls nicht dargestellt ist. Der Fachmann ist jedoch in der Lage, eine solche Steuerung ohne weiteres anhand der nachfolgenden Informationen zu verwirklichen.

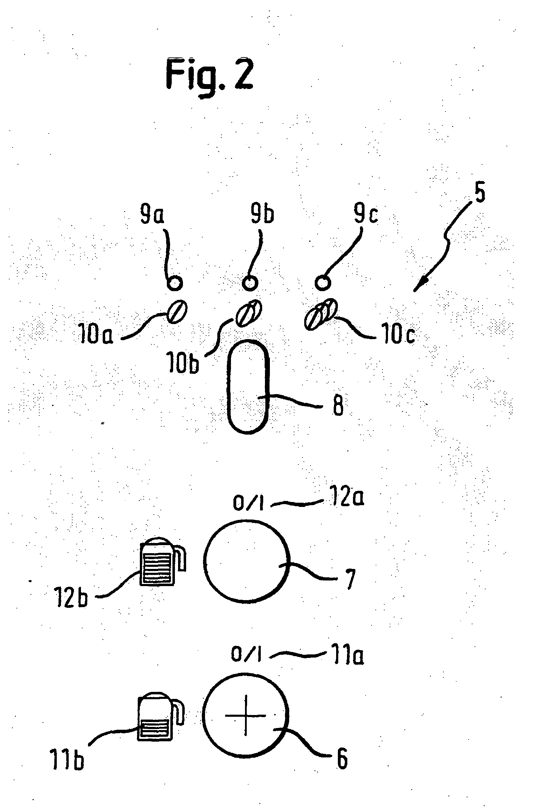

Am Gehäuse 2 sind, vorzugsweise in einem Bedienfeld 5 örtlich zusammengefasst, eine Vielzahl von Bedien- und Anzeigeelementen angeordnet, die in Fig. 2 näher dargestellt sind. Das Bedienfeld 5 enthält im dargestellten Ausführungsbeispiel ein erstes Bedienelement 6, ein zweites Bedienelement 7 und ein drittes Bedienelement 8.

Das dritte Bedienelement 8 dient der Aromawahl und ist bevorzugt als Drucktaste ausgebildet. Dem dritten Bedienelement 8 sind drei Anzeigelämpchen 9a, 9b und 9c zugeordnet, die durch entsprechende Symbole 10a, 10b und 10c einem bestimmten Steuerungszustand der Heizung zugeordnet sind. Zum Vorwählen des Aromas muss der Benutzer/die Benutzerin beispielsweise das Bedienelement 8 einmal für einen schwachen Kaffee, wobei die Lampe 9a aufleuchtet, zweimal für einen Kaffee mittlerer Stärke, wobei die Lampe 9b aufleuchtet, und dreimal für einen starken Kaffee drücken, wobei die Lampe 9c aufleuchtet.

Die ersten und zweiten Bedienelemente 6, 7 sind unabhängig vom Bedienelement 8 mit der Steuerung verbunden. Beide Bedienelemente 6 und 7 sind im dargestellten Ausführungsbeispiel als Leuchttasten ausgebildet, die aufleuchten, wenn sie betätigt wurden.

Im dargestellten Ausführungsbeispiel sind beide Bedienelemente 6 und 7 als Kombinations-Bedienelement ausgebildet und sind in der Lage, drei Funktionen zu erfüllen.

Das erste Kombinations-Bedienelement 6 dient, wie durch das Symbol 11a angedeutet, zum Einschalten und zum Ausschalten der Heizung, und zusätzlich, wie durch das Symbol 11 b angedeutet, zum Einleiten eines Brühvorgangs mit einer kleineren Brühmenge, d.h. beim Betätigen des Kombinations-Bedienelementes 6 wird außer dem Ein- und Ausschalten der Stromversorgung auch Einfluss auf die Betriebsparameter genommen, insbesondere der Wasserdurchlauf automatisch auf die kleinere Brühmenge eingestellt, ohne dass der Benutzer irgendwelche anderen Vorkehrungen treffen muss.

Das zweite Kombinations-Bedienelement 7 dient ebenfalls, wie durch das Symbol 12a bezeichnet, dem Einschalten und dem Ausschalten der Heizung bzw. der Kaffeemaschine 1 und zusätzlich, wie durch das Symbol 12b angedeutet, dem Vorwählen der Betriebsparameter für eine große Brühmenge; d.h. die Kaffeemaschine wird beim Drücken des Kombinations-Bedienelementes 7 ohne weitere Vorkehrungen mit Parametern betrieben, die auf eine große Brühmenge optimal eingestellt sind.

Beide Kombinations-Bedienelemente 6 und 7 dienen danach auch zum Ausschalten der Heizung bzw. der Kaffeemaschine 1. Dabei sind die AUS-Schaltfunktionen der beiden Kombinations-Bedienelemente 6 und 7 miteinander derart gekoppelt, dass die Kaffeemaschine 1 bzw. deren Heizung unweigerlich ausgeschaltet wird, sobald während des Betriebs entweder das erste Kombinations-Bedienelement 6 oder das zweite Kombinations-Bedienelement 7 gedrückt wird, unabhängig davon, welches der beiden Bedienelemente 6, 7 zum Einschalten der Kaffeemaschine 1 verwendet wurde.

Im vorliegenden Ausführungsbeispiel werden die beschriebenen Funktionen mittels Software in einem µC realisiert. Schaltungstechnisch entspricht dies einer aus der Installationstechnik bekannten Wechselschaltung.

Möchte somit der Benutzer bzw. die Benutzerin der Kaffeemaschine Kaffee in einer kleinen Brühmenge, beispielsweise nur die Menge einer Tasse, brühen, so muss er bzw. sie lediglich die Kaffeemaschine 1 über das erste Kombinations-Bedienelement 6 anschalten, wobei bei herkömmlichen, manuell zu beschickenden Haushalts-Kaffeemaschinen der Wassertank mit einer Tasse Wasser gefüllt und der Filterträger mit einer der Tassenmenge entsprechenden Menge Kaffeemehl beschickt wurde. Bei automatisch bzw. halbautomatisch arbeitenden Kaffeemaschinen ist es jedoch auch möglich, mit Hilfe der Kombinations-Bedienelemente 6 bzw. 7 auch diese Funktionen oder eine dieser Funktionen automatisch zu starten. Falls eine Aromavorwahl gewünscht wird, so kann dies über das dritte Bedienelement 8 vorgenommen werden. Nach dem Beendigen des Brühvorgangs muss der Benutzer bzw. die Benutzerin nur eines der beiden Bedienelemente 6 oder 7 drücken, um den Brühvorgang zu beenden, oder die Heizung bzw. die Kaffeemaschine auszuschalten.

Soll während eines Brühvorgangs die Brühmenge verändert werden, so muss der Brühvorgang gestoppt bzw. die Heizung oder Kaffeemaschine ausgeschaltet werden, was durch Betätigen eines der beiden Bedienelemente 6 oder 7 geschieht, und anschließend der Brühvorgang erneut gestartet bzw. die Heizung oder die Kaffeemaschine durch Drücken des Kombinations-Bedienelementes für die neue Brühmenge angeschaltet werden.

In Abwandlung des beschriebenen und gezeichneten Ausführungsbeispiels können mehr als zwei Kombinations-Bedienelemente vorgesehen sein. Die Bedienelemente können mit anderen, geeigneten Bauteilen, beispielsweise Kippschalter, Berührungsfelder oder dgl., verwirklicht werden. Eine Aromavorwahl muss nicht unbedingt vorgesehen sein.

## Patentansprüche

1. Vorrichtung zum Herstellen eines Brühgetränkes, mit Bedienelementen (6, 7) zum EIN- und AUS-Schalten und für eine Parameterwahl für das Brühgetränk, wobei wenigstens zwei Kombinations-Bedienelemente (6, 7) mit einer kombinierten EIN/AUS-Schaltfunktion und Parameterwahlfunktion vorgesehen sind.

2. Vorrichtung nach Anspruch 1, bei der die Parameterwahl eine Mengenvorwahl von wenigstens zwei Brühmengen ist.

3. Vorrichtung nach Anspruch 2, bei der wenigstens ein erstes Kombinations-Bedienelement (6) mit EIN/AUS-Schaltfunktion und Mengenvorwahl für eine erste kleinere Brühmenge und ein zweites Kombinations-Bedienelement (7) mit EIN/AUS-Schaltfunktion und Mengenvorwahl für eine zweite größere Brühmenge vorgesehen ist.

4. Vorrichtung nach Anspruch 1, bei der die Parameterwahl eine Aromavorwahl ist.

5. Vorrichtung nach Anspruch 4, bei der wenigstens ein erstes Kombinations-Bedienelement (6) mit EIN/AUS-Schaltfunktion und Aromavorwahl für eine erste schwächere Brühstärke und ein zweites Kombinations-Bedienelement (7) mit EIN/AUS-Schaltfunktion und Aromavorwahl für eine zweite größere Brühstärke vorgesehen ist.

6. Vorrichtung nach Anspruch 3 oder 5, bei der die AUS-Schaltfunktion der ersten und zweiten Kombinations-Bedienelemente (6, 7) gekoppelt sind.

7. Vorrichtung nach einem der Ansprüche 1 bis 6, die eine Kaffeemaschine (1) ist.

## Claims

1. Device for producing a hot drink, with control elements (6, 7) for ON and OFF switching and for a parameter selection for the hot drink, wherein at least two combination control elements (6, 7) are provided with a combined ON/OFF switching function and parameter selection function.

2. Device according to claim 1, in which the parameter selection is a quantity selection of at least two brewing quantities.

3. Device according to claim 2, in which at least one first combination control element (6) with ON/OFF switching function and quantity preselection for a first smaller brewing quantity and a second combination control element (7) with ON/OFF switching function and quantity preselection for a second larger brewing quantity are provided.

4. Device according to claim 1, in which the parameter selection is an aroma preselection.

5. Device according to claim 4, in which at least one first combination control element (6) with ON/OFF switching function and aroma preselection for a first weaker brewing strength and a second combination control element (7) with ON/OFF switching function and aroma preselection for a second greater brewing strength are provided.

6. Device according to claim 3 or 5, in which the OFF switching functions of the first and second combination control elements (6, 7) are coupled.

7. Device according to any one of claims 1 to 6, which is a coffee machine (1).

## Revendications

1. Dispositif pour la préparation d'une boisson infusée, comprenant des éléments de commande (6, 7) pour la mise en MARCHE et ARRET et pour une sélection de paramètres pour la boisson infusée, au moins deux éléments de commande de combinaison (6, 7) comprenant une fonction de commutation combinée MARCHE/ARRET et une fonction de sélection de paramètres étant ménagés.

2. Dispositif selon la revendication 1, dans lequel la sélection de paramètres est une présélection de quantité d'au moins deux quantités à infuser.

3. Dispositif selon la revendication 2, dans lequel sont ménagés au moins un premier élément de commande de combinaison (6), comprenant une fonction de commutation MARCHE/ARRET et une présélection de quantité pour une première petite quantité à infuser, ainsi qu'un second élément de commande de combinaison (7), comprenant une fonction de commutation MARCHE/ARRET et une présélection de quantité pour une seconde quantité à infuser plus grande.

4. Dispositif selon la revendication 1, dans lequel la sélection de paramètres est une présélection d'arôme.

5. Dispositif selon la revendication 4, dans lequel sont ménagés au moins un premier élément de commande de combinaison (6), comprenant une fonction de commutation MARCHE/ARRET et une présélection d'arôme pour une première intensité d'infusion plus faible, ainsi qu'un second élément de commande de combinaison (7), comprenant une fonction de commutation MARCHE/ARRET et une présélection d'arôme pour une seconde intensité d'infusion plus forte.

6. Dispositif selon la revendication 3 ou 5, dans lequel les fonctions de commutation ARRET des premiers et des seconds éléments de commande de combinaison (6, 7) sont couplées.

7. Dispositif selon l'une quelconque des revendications 1 à 6, lequel est une cafetière (1).
